# EUROPEAN PATENT APPLICATION

(11) **EP 1 914 778 A2**
(43) Date of publication of application: **23.04.2008**
(21) Application number: 07118627.4
(22) Date of filing: 16.10.2007
(51) Int. Cl.: H01H 9/54, H02H 3/08

(54) **Trip control apparatus and method for circuit breaker**

(30) Priority: 17.10.2006 KR 20060101066; 20.09.2007 KR 20070095914
(71) Applicant: LS Industrial Systems Co., Ltd, Seoul 100-801 (KR)
(72) Inventor: EOM, Jae Pil LS Industrial Systems Co., Ltd., Chungcheongbuk-do Cheongju-si (KR)
(74) Representative: Holmberg, Magnus

(57) **Abstract**

The present invention relates to a trip control apparatus and method for a circuit breaker. If overcurrent is detected from a current supplied to a load, heat value according to overcurrent is calculated before power supplied to the load is shut off and then transferred to a heat value management unit (150), which is operated using power of a battery (160) even upon power-off. Heat value related data is stored and managed. When a consecutive overcurrent occurs after the power of the circuit breaker (100) is supplied again, the remaining heat value in a current line is anlyzed based on a heat value stored in the heat value management unit (150) and an elapsed time and a trip delay time of the circuit breaker is decided variably. Accordingly, the remaining heat value and the trip delay time can be calculated accurately.

## Description

### Cross-Reference to Related Application

The present application is based on, and claims priorities from, Korean Application Numbers 10-2006-0101066 filed October 17, 2006 and 10-2007-0095914 filed September 20, 2007, disclosures of which are incorporated by reference herein in its entirety.

### BACKGROUND OF THE INVENTION

### Field of the invention

The present invention relates to a trip control apparatus for a circuit breaker, and more particularly, to a trip control apparatus and method for a circuit breaker, in which heat value-related data is managed through a heat value management unit that operates even upon power-off, and heat value remaining in the current line is analyzed based on a heat value and a time elapsed, which are stored in the heat value management unit, upon occurrence of overcurrent in order to decide a trip delay time of the circuit breaker.

### Background of the Related Art

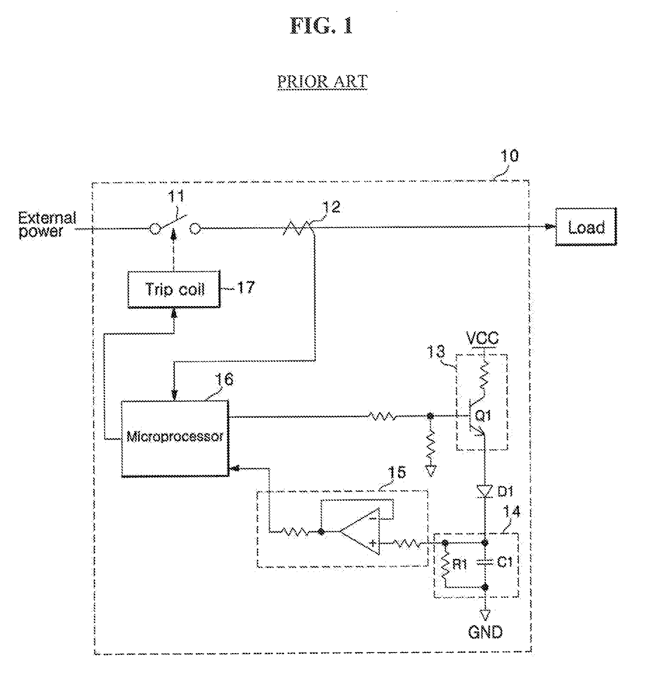

FIG. 1 is a circuit diagram showing a conventional trip control apparatus for a circuit breaker.

A trip control apparatus 10 includes a break switch 11, a current sensor 12, a switch unit 13, a diode D1, a charging circuit unit 14, a voltage follower circuit unit 15, and a microprocessor 16.

The break switch 11 is disposed in a line along which an external power is supplied to a load, and is configured to shut off the power, supplied to the load, through a trip coil 17.

The current sensor 12 is disposed on the line between the break switch 11 and the load, and is configured to sense current, supplied to the load. The current sensor 12 not also senses current supplied to the load, but also acquires an operating power of the circuit breaker from the line and then supplies it to the load.

The switch unit 13 is comprised of a transistor Q1. The transistor Q1 is turned on in response to a control signal output from the microprocessor 16 during a predetermined trip delay time when current detected by the current sensor 12 is overcurrent and, therefore, disconnects a path so that the current of a power source stage VCC flows through a resistor.

The diode D1 is configured to prevent the current from flowing in a reverse direction when the transistor Q1 is turned on.

The charging circuit unit 14 is comprised of a capacitor C1. The capacitor C1 is configured to charge a voltage using power source current, flowing through a current path of the transistor Q1, and discharge a charged voltage to the ground through a first resistor R1 when the break switch 11 is opened (that is, when a power source voltage is not supplied through the transistor Q1).

The voltage follower circuit unit 15 is configured to supply the microprocessor 16 with the amount of voltage, remaining in the capacitor C1 of the charging circuit unit 14, when the opened break switch 11 is closed.

The microprocessor 16 is configured to control the switch unit 13 during a predetermined trip delay time when the current detected by the current sensor 12 is overcurrent so that the charging circuit unit 14 is charged with a power source voltage, control the trip coil 17 to open the break switch 11 after a predetermined trip delay time elapses, and calculate a voltage, remaining in the charging circuit unit 14, when the power is supplied again after a lapse of a predetermined trip delay time and estimate the remaining heat value on the line based on the remaining voltage.

In the conventional trip control method constructed as above, the microprocessor 16 controls the switch unit 13 to turn on it when the current detected by the current sensor 12 is overcurrent. Thus, the current of the power source stage VCC Hows through the capacitor C1 of the charging circuit unit 14 through the switch unit 13, and the capacitor C1 begins charging according to a time constant decided by the first resistor R1.

The microprocessor 16 then controls the trip coil 17 to open the break switch 11 after a lapse of a predetermined trip delay time.

If the break switch 11 is opened, the capacitor C1 of the charging circuit unit 14 is not further charged with the power source voltage VCC, and a charged voltage begins gradually discharging through the first resistor R1.

Meanwhile, the microprocessor 16 of the circuit breaker is operated based on the power acquired through the current sensor 12. When the current supplied to the load is overcurrent or a leakage current, the microprocessor 16 automatically opens the break switch 11 through the trip coil 17 and does not operate since it is not further supplied with the operating power.

Thereafter, if the break switch 11 is closed by a user and the circuit breaker is supplied with the operating power again, the microprocessor 16 determines whether overcurrent is input to the load through the current sensor 12. If overcurrent is detected again, the microprocessor 16 reads a voltage, remaining in the capacitor C1, through the voltage follower circuit unit 15.

The microprocessor 16 calculates a time elapsed after the break switch 11 is opened based on the read value, calculates the remaining voltage based on a previously stored data table according to the calculated time elapsed, and determines a current heat value remaining on the device and line on the basis of the calculated remaining voltage.

In the prior art operating as described above, the remaining voltage, a time elapsed and the remaining heat value must be found by calculating the slope of a discharge curve of a voltage stored in the capacitor. Accordingly, there are problems in that it is difficult to calculate the remaining heat value accurately and the cost is high since expensive accurate components must be used.

Further, the capacitor of the charging circuit unit must be maintained for up to 30 minutes with the power being shut. Accordingly, there is a problem in that the manufacturing cost rises because a bulky component having a very high capacitance and resistance value must be used.

In the event that a circuit, which has been once charged, must be discharged due to a reduced current, the circuit becomes complicated because an additional component has to be added, Accordingly, there are problems in that the circuit is difficult to control in terms of hardware and software and becomes complicated.

### SUMMARY OF THE INVENTION

Accordingly, the present invention has been made in view of the above problems occurring in the prior art, and it is an object of the present invention to provide a trip control apparatus and method for a circuit breaker, in which heat value-related data is managed through a heat value management unit, which operates even upon power-off, the remaining heat value on the current line is analyzed based on a heat value and a time elapsed, which are stored in the heat value management unit, upon occurrence of overcurrent, and a trip delay time of the circuit breaker is decided variably, so that a break switch is controlled rapidly according to a heat value status, currently remaining in a load system, and shock against the line and damage to a load due to consecutive overcurrent can be prevented accordingly,

To achieve the above object, a trip control apparatus for a circuit, breaker according to the present invention includes a break switch disposed on a current path along which an external power is supplied to a load and configured to shut off a power supplied to the load through a trip coil ; a current sensor disposed at the rear end of the break switch and configured to sense a current supplied to the load; a heat value management unit for storing externally received heat value data in matching with a time on which heat value data was transferred so that the stored data can be maintained by receiving power from a battery at the time of power-off, and transferring heat value-related data, including the stored heat value data, the time on which the heat value data was transferred, and a current time according to an external request; and a microprocessor for calculating heat value of a load system due to overcurrent during a predetermined trip delay time, transferring the calculated heat value data to the heat value management unit and controlling a trip coil to shut off the power supplied to the load, when the current input from the current sensor is overcurrent, and calculating the remaining heat value based on the heat value-related data stored in the heat value management unit and deciding a trip delay time based on the calculated remaining heat value if the power is re-supplied and then overcurrent is detected again.

The circuit breaker is preferably an air circuit breaker.

The heat value management unit includes a memory for storing the heat value data transferred from the microprocessor and a time on which the heat value data was transferred; and a time controller for checking the heat value data transferred from the microprocessor and the time on which the heat value data was transferred and storing the heat value data and the time in the memory, and checking the heat value data and the time on which the heat value data was transferred, which are stored in the memory, and a current time and transferring the heat value data, the time, and the current time when the microprocessor requests heat value-related data.

The time on which the heat value data was transferred is approximately identical to a time on which the operating power of the microprocessor is removed. The current time is approximately identical to a time on which overcurrent is detected secondarily.

The microprocessor controls the trip coil to shut off the power supplied to the load when the calculated heat value data is higher than a predetermined value.

To achieve the above object, a trip control method for a circuit breaker according to the present invention includes the steps of when a current detected by a microprocessor through a current sensor is overcurrent, calculating heat value of a load system due to the overcurrent during a predetermined trip delay time; controlling a calculated beat value data to be stored in a heat value management unit, and when the calculated heat value data is higher than a predetermined value, controlling a trip coil to shut off power supplied to a load; if the power is shut off, allowing the heat value management unit to maintain information about the stored heat value data and a time on which the heat value data was transferred using power supplied from a battery; if overcurrent is detected again after the shut-off power is re-supplied, allowing the microprocessor to receive the heat value-related data the heat value management unit and calculating the remaining heat value of the load system; and variably deciding a predetermined trip delay time based on the calculated remaining heat value.

### BRIEF DESCRIPTION OF THE DRAWINGS

Further and advantages of the invention can be more fully understood from the following detailed description taken in conjunction with the accompanying drawings in which:

FIG. 1 is a circuit diagram showing a conventional trip control apparatus for a circuit breaker;

FIG. 2 is a block diagram showing a trip control apparatus for a circuit breaker according to an embodiment of the present invention; and

FIGS. 3a and 3b are flowcharts illustrating a trip control process of the circuit breaker according to an embodiment of the present invention.

### DETAILED DESCRIPTION OF THE PREFERRED EMBODIMENT

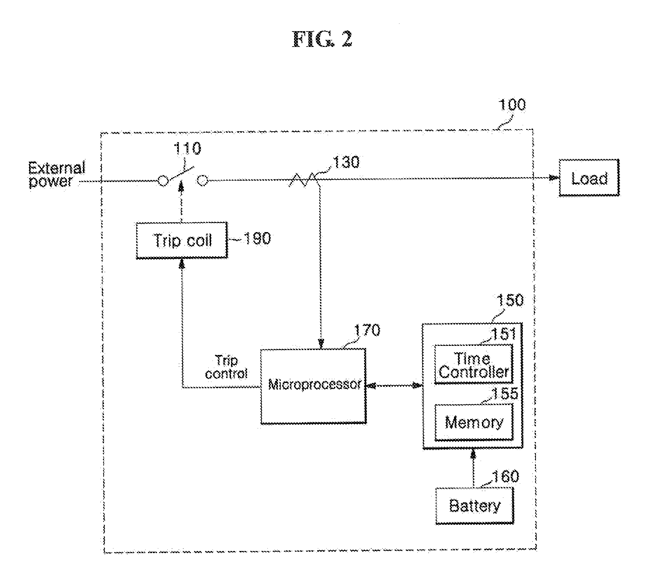

A trip control apparatus and method for a circuit breaker according to the present invention will now be described in detail in connection with specific embodiments with reference to FIGS. 2 to 3b.

FIG. 2 is a block diagram showing a trip control apparatus for a circuit breaker according to an embodiment of the present invention. A circuit breaker 100 includes a trip control apparatus comprising a break switch 110, a current sensor 130, a heat value management unit 150, a microprocessor 170, and a trip coil 190.

The break switch 110 is disposed in a line along which an external power is supplied to a load, and is configured to shut off the power, supplied to the load, through a trip coil 190.

The current sensor 130 is disposed on the line between the break switch 110 and the load, and is configured to sense the current supplied to the load. The current sensor 130 not also senses the current supplied to the load, but also acquires an operating power of the circuit breaker from the line and then supplies it to the load.

The heat value management unit 150 is configured to store heat value data, received from the microprocessor 170, in matching with a time on which the heat value data is transmitted, but maintain the stored data using power supplied from the battery 160 at the time of powder-off. The heat value management unit 150 is also configured to transfer heat value-related data, including the stored heat value data at the request of the microprocessor 170, a time on which the heat value data was transferred and a current time, to the microprocessor 170. The heat value management unit 150 may be implemented using a common Real Time Counter (RTC) element.

The heat value management unit 150 includes memory 155 and a time controller 151. The memory 155 is configured to store heat value data received from the microprocessor 170 and a time on which the heat value data is transferred. The time controller 151 is configured to check heat value data transferred from the microprocessor 170 and a time on which the heat value data is transferred, and store them in the memory 155. The time controller 151 is also configured to check the heat value data and the time on which the heat value data was transferred, which are stored in the memory 155, and a current time when the microprocessor 170 requests heat value-related data, and transfers them to the microprocessor 170.

The time controller 151 calculates and acquires a time on the basis of a clock signal generated through a crystal oscillator.

When the current detected through the current sensor 130 is overcurrent, the microprocessor 170 accumulates and calculates the heat value of a load system due to the overcurrent during a predetermined trip delay time, and transfers a calculated heat value data to the heat value management unit 150. Further, when a calculated heat value data is higher than a predetermined value, the microprocessor 170 controls the trip coil 190 to shut off the power supplied to the load. If the break switch 110 is opened as the operating power is supplied through the current sensor 130 and the power is thus shut off, the microprocessor 170 cannot operate because it is not supplied with the operating power through the current sensor 130.

If an external power is supplied again through the current sensor 130, the microprocessor 170 detects the current again through the current sensor 130. If overcurrent is detected again, the microprocessor 170 calculates the remaining heat value of the load system based on the heat value-related data stored in the heat value management unit 150, and variably decides a predetermined trip delay time based on the calculated remaining heat value.

In this case, the microprocessor 170 calculates the remaining heat value by checking the elapsed time of the heat value data, and sets the trip delay time shorter when the remaining heat value is greater. What the remaining heat value is great is meant that the load system is in an overheating state due to previous overcurrent, etc. Therefore, in order to protect the load system, the microprocessor 170 controls the trip coil 190 more rapidly than a trip delay time where the remaining heat value is zero at normal times, and opens the break switch 110.

The heat value management unit 150 transfers the heat value-related data at the request of the microprocessor 170. The heat value-related data includes heat value data, a time on which the heat value data is transferred, and a current time.

The time on which the heat value data is transferred from the microprocessor 170 to the heat value management unit 150 is approximately identical to a time on which the operating power of the microprocessor 170 is removed. The current time transferred from the heat value management unit 150 to the microprocessor 170 is approximately identical to a time on which overcurrent is detected secondarily.

Meanwhile, the microprocessor 170 controls the trip coil 190 only when heat value data of the load system, which is calculated during a trip delay time, is higher than a predetermined value, so that the break switch 110 is opened. The microprocessor 170 does not open the break switch 110 when heat value data of the load system, which is calculated during a trip delay time, is lower than a predetermined value.

It has been described above that the microprocessor 170 calculates heat value data when overcurrent is input and stores a calculated heat value data in the heat value management unit 150 for convenience of description. However, even when the current detected through the current sensor 130 does not exceed a predetermined overcurrent, the microprocessor 170 may calculate heat value data periodically and store a calculated heat value in the heat value management unit 150. Assuming that overcurrent is 110 % or more of a rating current, it is necessary to periodically store heat value data because 90% to 109% close to the rating current can also generate degradation of a load or line.

The trip control apparatus 100 according to the present invention can be applied to a circuit breaker that is supplied with an operating power through the current sensor 130 or a current inductor embedded in a current sensor, and can be advantageously applied to an air circuit breaker.

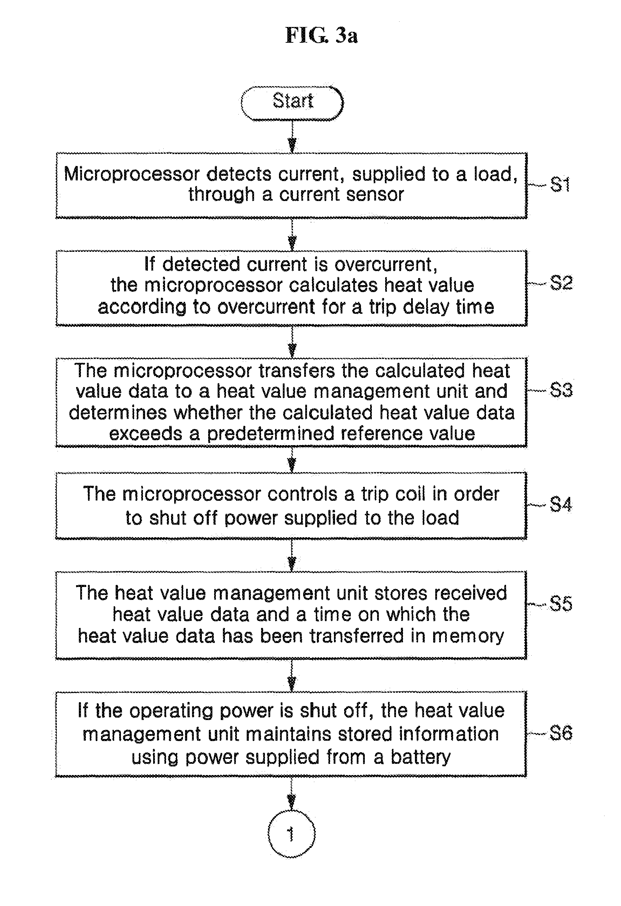

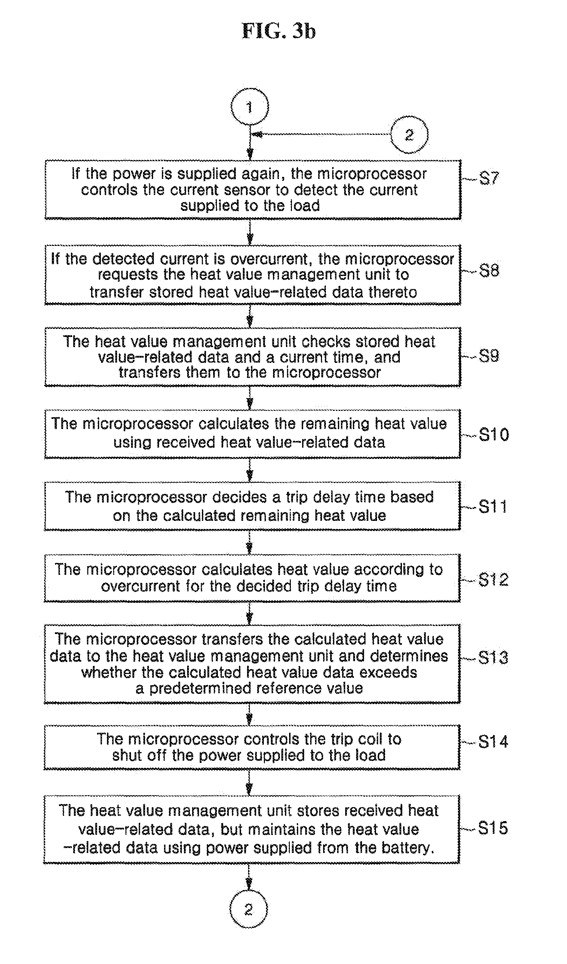

An overall operating process of the trip control apparatus constructed as above is described below with reference to the flowcharts of FIGS. 3a and 3b.

The circuit breaker 100 is first operated according to an operating power supplied from the current sensor 130. The current sensor 130 may include any kind of sensors, such as a current transformer, Rogowski or a shunt.

The microprocessor 170 of the circuit breaker 100 detects a current, supplied to the load, through the current sensor 130, and determines whether a detected current is overcurrent (S1).

If, as a result of the determination, the detected current is overcurrent, the microprocessor 170 accumulates and calculates heat value according to the overcurrent generated from the line and the load system during a predetermined trip delay time (S2). The heat value Q is found by calculating (Q = I² x T) a duration period (T; second) of the current I during the trip delay time.

After the trip delay time elapses, the microprocessor 170 transfers the calculated heat value data to the heat value management unit 150 and also determines whether the calculated heat value data exceeds a predetermined reference value (S3).

If the trip delay time elapses and the heat value data exceeds the reference value, the microprocessor 170 controls the trip coil 190 to open the break switch 110, so that the power supplied to the load is shut off (S4). If the break switch 110 is opened, the microprocessor 170 is not supplied with the operating power through the current sensor 130 and therefore does not operate.

Meanwhile, the time controller 151 of the heat value management unit 150 is supplied with the heat value data from the microprocessor 170, checks a time on which the heat value data was transferred, and stores the beat value data and the time on which the heat value data was in the memory 155 (S5).

If the break switch 110 is opened and the operating power is shut off, the heat value management unit 150 is supplied with power from the battery 160 (that is, auxiliary power supply means) and maintains the information about the heat value data and the time on which the heat value data was transferred, which are stored in the memory 155 (S6).

The heat value management unit 150 is configured to operate using the power supplied through the current sensor 130 at normal times, but to be supplied with the power of the battery 160 when the power is shut off.

Thereafter, if the break switch 110 is closed again by a user, the microprocessor 170 of the circuit breaker is operated using the operating power supplied from the current sensor 130. The heat value management unit 150 is also automatically operated using the operating power supplied from the current sensor 130.

The microprocessor 170 of the circuit breaker then controls the current sensor 130 to detect the current supplied to the load again, and determines whether a detected current is overcurrent (S7).

If, as a result of the determination, the detected current is overcurrent, the microprocessor 170 requests the heat value management unit 150 to transfer the stored heat value-related data thereto (S8).

The time controller 151 of the heat value management unit 150 checks the heat value data and the time on which heat value was transferred, which are stored in the memory 155, and a current time, and transfers them to the microprocessor 170 (S9).

The microprocessor 170 receives heat value-related data, including the heat value data, the time on which the heat value data was transferred, and the current time from the heat value management unit 150, and calculates the remaining heat value of the line and the load system (S10). The remaining heat value is acquired by calculating an elapsed time of the stored heat value data based on the time on which the heat value data was transferred and the current time.

In this case, the microprocessor 170 can acquire the remaining heat value by calculating an elapsed time, which was taken to store the heat value data in the heat value management unit 150, and then searching for a value corresponding to the heat value data and the elapsed time through a previously stored reference table.

The microprocessor 170 acquires the remaining heat value as described above, and sets the trip delay time short when the remaining heat value is great. This is for the purpose of protecting degradation or damage of the load system by setting the trip delay time shorter than that at normal times (when the remaining heat value is zero), that is, by rapidly opening the break switch 110 because the line and the load system is in an overheat state due to previous overcurrent.

The microprocessor 170 variably decides a predetermined trip delay time based on the calculated remaining heat value (S 11)0

The microprocessor 170 then calculates heat value according to overcurrent, which is generated from the line and the load system, for the decided trip delay time (S12).

If the trip delay time elapses, the microprocessor 170 transfers the calculated heat value data to the heat value management unit 150 and also determines whether the calculated heat value data exceeds a predetermined reference value (S13).

If the trip delay time elapses and it is determined that the heat value data exceeds the reference value, the microprocessor 170 controls the trip coil 190 to open the break switch 110, so that the power supplied to the load is shut off (S14).

The time controller 151 of the heat value management unit 150 is supplied with the heat value data from the microprocessor 170, checks a time on which the heat value data was transferred, and stores the heat value data and the time on which the heat value data was transferred in the memory 155.

If the operating power is shut off as the break switch 110 is opened, the heat value management unit 150 is supplied with the power from the battery 160 and maintains information about the heat value data and the time on which the heat value data was transferred, which are stored in the memory 155 (S15).

Thereafter, if the shut-off power is supplied again and overcurrent is detected, the microprocessor 170 repeatedly performs the process of being supplied with heat value-related data from the heat value management unit 150, calculating the remaining heat value of the load system, and variably deciding a predetermined trip delay time based on the calculated remaining heat value (S7 to S15).

As described above, in accordance with the trip control method according to the present invention, the heat value management unit 150 such as a RTC element simulates data about the heat value of a line and a load and an elapsed time upon occurrence of overcurrent. Accordingly, the remaining heat value can be measured more accurately, error occurring when the device is implemented as an existing analog device can be minimized, a circuit can be simplified, and a more reliable and accurate operation can be accomplished under consecutive overcurrent fail conditions.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A trip control apparatus for a circuit breaker, comprising:
a break switch disposed on a current path along which an external power is supplied to a load and configured to shut off the power supplied to the load through a trip coil;
a current sensor disposed at the rear end of the break switch and configured to sense a current supplied to the load;
a heat value management unit for storing externally received heat value data in matching with a time on which heat value data was transferred so that the stored data can be maintained by receiving power from a battery at the time of power-off, and transferring heat value-related data, including the stored heat value data, the time on which the heat value data was transferred, and a current time according to an external request; and
a microprocessor for calculating heat value of a load system due to overcurrent during a predetermined trip delay time, transferring the calculated heat value data to the heat value management unit and controlling a trip coil to shut off the power supplied to the load, when the current input from the current sensor is overcurrent, and calculating the remaining heat value based on the heat value-related data stored in the heat value management unit and deciding a trip delay time based on the calculated remaining heat value if the power is re-supplied and then overcurrent is detected again.

2. The trip control apparatus as claimed in claim 1, wherein the circuit breaker is an air circuit breaker.

3. The trip control apparatus as claimed in claim 1, wherein the heat value management unit comprises:
A memory for storing the heat value data transferred from the microprocessor and a time on which the heat value data was transferred; and
a time controller for checking the heat value data transferred from the microprocessor and the time on which the heat value data was transferred and storing the heat value data and the time in the memory, and checking the heat value data and the time on which the heat value data was transferred, which are stored in the memory, and a current time and transferring the heat value data, the time, and the current time when the microprocessor requests heat value-related data.

4. The trip control apparatus as claimed in any one of claims 1 to 3, wherein:
the time on which the heat value data was transferred is approximately identical to a time on which the operating power of the microprocessor is removed, and
the current time is approximately identical to a time on which overcurrent is detected secondarily.

5. The trip control apparatus as claimed in any one of claims 1 to 3, wherein the microprocessor calculates the remaining heat value by checking an elapsed time of the heat value data.

6. The trip control apparatus as claimed in any one of claims 1 to 3, wherein the microprocessor controls the trip coil to shut off the power supplied to the load when the calculated heat value data is higher than a predetermined value.

7. A trip control method for a circuit breaker, comprising the steps of:
when a current detected by a microprocessor through a current sensor is overcurrent, calculating heat value of a load system due to the overcurrent during a predetermined trip delay time;
controlling a calculated heat value data to be stored in a heat value management unit, and when the calculated heat value data is higher than a predetermined value, controlling a trip coil to shut off power supplied to a load;
if the power is shut off, allowing the heat value management unit to maintain information about the stored heat value data and a time on which the heat value data was transferred using power supplied from a battery;
if overcurrent is detected again after the shut-off power is re-supplied, allowing the microprocessor to receive the heat value-related data from the heat value management unit and calculating the remaining heat value of the load system; and
variably deciding a predetermined trip delay time based on the calculated remaining heat value.

8. The trip control method as claimed in claim 7, wherein when the power is shut off, the power supplied to the microprocessor is also shut off.

9. The trip control method as claimed in claim 7, wherein the heat value-related data includes heat value data, a time on which the heat value data was transferred, and a current time.

10. The trip control method as claimed in any one of claims 7 to 9, wherein the microprocessor acquires the remaining heat value by calculating an elapsed time, which is taken for the heat value data to be stored in the heat value management unit.

11. The trip control method as claimed in any one of claims 7 to 9, wherein the microprocessor calculates an elapsed time, which is taken for the heat value data to be stored in the heat value management unit and then acquires the remaining heat value by searching for a value corresponding to the heat value data and the elapsed time through a previously stored reference table.
